# EUROPÄISCHE PATENTSCHRIFT

(11) **EP 1 245 508 B1**
(45) Veröffentlichungstag und Bekanntmachung des Hinweises auf die Patenterteilung: **29.09.2004**
(21) Anmeldenummer: 02006983.7
(22) Anmeldetag: 27.03.2002
(51) Int. Cl.: B65G 1/08, B65G 13/12

(54) **Verfahren zum Anpassen der Fördergeschwindigkeit für entlang einer schwerkraftbetriebenen Transportbahn transportierte Güter sowie Transportbahn**
Method of adjusting the conveyance speed of parts movable by gravity along a conveyor track and such a conveyor track
Méthode de régulation de la vitesse d'articles mobiles le long d'un transporteur sous l'influence de la force de gravité et un tel transporteur

(30) Priorität: 31.03.2001 DE 10116164
(43) Veröffentlichungstag der Anmeldung: 02.10.2002
(73) Patentinhaber: NEDCON MAGAZIJNINRICHTING B.V., NL-7000 AA Doetinchem (NL)
(72) Erfinder: de Jong, Leen-Pieter, 7051 GN Varsseveld (NL)
(74) Vertreter: Christophersen & Partner

(56) Entgegenhaltungen:
- EP-A- 0 225 722
- US-A- 3 924 718
- US-A- 5 123 517

## Beschreibung

Die Erfindung betrifft ein Verfahren zum Anpassen der Fördergeschwindigkeit für entlang einer schwerkraftbetriebenen Transportbahn transportierte Güter. Des weiteren betrifft die Erfindung eine Transportbahn zum Transportieren von Gütern mittels Schwerkraft.

Ein solches Verfahren ist z.B. aus dem Dokument EP-A-0 225 722 bekannt.

Auf dem Gebiet der Logistik werden zur Absicherung eines reibungslosen Warenflusses und als Verteilerknotenpunke große Lagereinrichtungen unterhalten. In diesen Lagereinrichtungen werden Waren unterschiedlichster Art und Größe in größeren Mengen bevorratet und entsprechend einem Bedarf dem Lager entnommen und verteilt. Dabei können Waren entweder einzeln eingelagert werden, oder es werden aus einzelnen Wareneinheiten sogenannte Gebinde zusammengestellt, in deren Form die Waren gebündelt gelagert und transportiert werden können. Solche Gebinde werden beispielsweise in Form von palettiertem Gut, in Kartoneinheiten zusammengefaßten Waren, in Drahtkäfigen aufbewahrten Waren etc. gebildet.

Solche Lagereinrichtungen weisen üblicherweise ausgedehnte Regallagerbereiche auf, in denen die einzelnen Waren nach vorgegebenen Mustern sortiert eingelagert sind, und aus denen diese bedarfsgerecht entnommen werden können. Bestandteil derartiger Lagereinrichtungen sind ferner Arbeitsplätze, an denen Waren sortiert und zu bestimmten Versandgruppen zusammengestellt werden, um die Lagereinrichtung für einen Weitertransport zu einem Bestimmungsort zu verlassen. Auch sind Übergabestellen vorgesehen, an denen das Lager unsortiert verlassende Waren für einen Weitertransport über gängige Transportmittel, wie beispielsweise Straßen-, Schienen- oder Wasserfracht, verlassen.

Die zwischen den einzelnen Abschnitten der Lagereinrichtung zurückzulegenden Wege durch Transportbahnen überbrückt. Auf derartige Transportbahnen abgestellte Güter werden entlang durch die Transportbahnen vorgegebener Wege zu einem vorgewählten Verarbeitungspunkt in der Lagereinrichtung verbracht.

Für solche Transportbahnen sind generell zwei unterschiedliche Konzepte bekannt. Zum einen können die Transportbahnen, beispielsweise gebildet durch Rollenbahnen oder Förderbänder, motorisch angetrieben sein. Bei einer derartigen Lösung werden die auf den Transportbahnen abgestellten Güter, beispielsweise einzelne Waren oder Warengebinde, mit Hilfe der angetriebenen Transportbahn in eine durch den Antrieb vorgegebene Richtung und mit einer durch den Antrieb vorgegebenen Geschwindigkeit transportiert. Ein zweites, von dem erstgenannten Konzept grundsätzlich verschiedenes Konzept ist ohne eigenen Antrieb realisiert und nutzt zum Weitertransport der Güter die durch die Güter ausgeübte Gewichtskraft aus. Hierzu sind die einzelnen Transportabschnitte der Transportbahnen gegenüber der Horizontalen geneigt, so daß der als Hangabtriebskraft bezeichnete, parallel zur Transportbahn weisende Teil der Gewichtskraft den Vortrieb des Transportgutes bewirkt. Als Transportbahn können hier beispielsweise Rollenbahnen genutzt werden, aber auch auf geneigten Führungsbahnen laufende Transportwagen oder ähnliches.

Da schwerkraftbetriebene Transportbahnen ohne zusätzlichen Antrieb arbeiten, sind diese kostengünstiger sowohl hinsichtlich der Anschaffung als auch im Hinblick auf die Betriebskosten. Insbesondere bei ausgedehnten Lagereinrichtungen entfallen die ansonsten für einzelne Transportbahnabschnitte nötigen Antriebe, welche somit weder bei den Anschaffungskosten, noch bei den laufenden Unterhaltungskosten ins Gewicht fallen. Vielerorts werden aus diesem Grunde die schwerkraftbetriebenen Transportbahnen zum Warentransport in großen Lagereinrichtungen bevorzugt.

Bei bekannten schwerkraftbetriebenen Transportbahnen wird zum Zeitpunkt der Montage der Bahnen eine vorbestimmte Neigung der Transportbahnen eingestellt und sodann beibehalten. Der Neigungswinkel der Bahn bezogen auf eine Horizontale bestimmt jedoch wesentlich den Anteil der durch das Transportgut erzeugten Gewichtskraft, der in Form der Hangabtriebskraft für einen Transport der Güter umgesetzt wird. Daraus bestimmt sich einerseits selbstverständlich die Förderrichtung, da ein schwerkraftbetriebener Transport lediglich entlang der geneigten Bahn in Abwärtsrichtung vollzogen werden kann, es bestimmt sich daraus allerdings auch - abhängig von dem Gewicht des zu transportierenden Gutes - dessen Fördergeschwindigkeit. Ist die Transportbahn dabei zum Transport lediglich einer bestimmten Sorte von Gütern, beispielsweise immer wiederkehrend der gleichen Palettenbeladung eines bestimmten Gutes, wie z. B. Nahrungsmittel einer bestimmten Sorte, ausgelegt, so kann mittels einer einmaligen Optimierung der Neigung eine gewünschte Fördergeschwindigkeit in einer vorbestimmten Förderrichtung festgelegt werden. Eine Änderung ist in diesem Falle nicht erforderlich. Sollen nun in ein und derselben Transportbahn unterschiedlichste Güter, beispielsweise Paletten mit vergleichsweise schweren Artikeln, wie z. B. in Flaschen abgefüllte Getränke, sowie vergleichsweise leichte Güter, wie z. B. Paletten mit Hygienepapierartikeln, transportiert werden, so erreichen diese Güter aufgrund der voreingestellten Neigung der Transportbahn in Abhängigkeit ihrer Gewichtskraft unterschiedliche Transportgeschwindigkeiten. Die vergleichsweise schweren Artikel nehmen aufgrund ihrer höheren Gewichtskraft eine deutlich höhere Transportgeschwindigkeit auf. Dies ist jedoch unerwünscht, insbesondere dann, wenn bei vergleichsweise schweren Artikeln eine überhöhte Transportgeschwindigkeit zu einer Gefährdung der Artikel führt. Dies ist beispielsweise bei flüssigkeitsgefüllten Glasflaschen und ähnlichen Gütern der Fall.

Zwar wäre es denkbar, durch einen veränderten Aufbau die Neigung der Transportbahn abzuändern, jedoch erfordert dies einen erheblichen Montageaufwand und ist somit für innerhalb kurzer Intervalle wechselnde Güter nicht durchführbar.

Ein weiterer Nachteil der bekannten Transportbahnen mit voreingestellten Neigungen bestehen darin, daß die Transportrichtung aufgrund der vorgegebenen Neigung fest vorgegeben ist. Soll nun aus irgendwelchen Gründen, beispielsweise um ein bestimmtes Transportgut aus der Förderstrecke wieder zurück ins Regallager zu verbringen, die Transportrichtung geändert werden, so ist dies nicht möglich bzw. es muß ein Rücktransport der Güter auf anderen Wegen stattfinden.

Ausgehend von diesem Stand der Technik liegt der Erfindung die **Aufgabe** zugrunde, ein Verfahren zum Anpassen der Fördergeschwindigkeit für entlang einer schwerkraftbetriebenen Transportbahn transportierte Güter anzugeben. Des weiteren soll eine bekannte Transportbahn zum Transportieren von Gütern mittels Schwerkraft dahingehend weiterentwickelt werden, daß sie flexibler einsetzbar und insbesondere für Güter unterschiedlichen Gewichts gleichermaßen sicher betreibbar ist.

Zur technischen **Lösung** dieser Aufgabe wird bezüglich des Verfahrens ein Verfahren zum Anpassen der Fördergeschwindigkeit für entlang einer schwerkraftbetriebenen Transportbahn transportierte Güter vorgeschlagen, bei dem ein auf die Horizontale bezogener Neigungswinkel der Transportbahn während des Betriebes der Transportbahn zum Anpassen der Fördergeschwindigkeit und/oder Fördereinrichtung verändert wird.

Anstelle des fest vorgegebenen Neigungswinkels bekannter Transportbahnen ist mit Hilfe des erfindungsgemäßen Verfahrens ein variabler Neigungswinkel in Abhängigkeit von der gewünschten Fördergeschwindigkeit einstellbar. Dies geschieht während des normalen Betriebes der Transportbahn, ohne daß diese im Wege umfangreicher Ummontagearbeiten verändert werden muß. Mit dem erfindungsgemäßen Verfahren ist es somit erstmals auf einfache Weise möglich, schwerkraftbetriebene Transportbahnen während des Betriebes, also sozusagen Online, hinsichtlich der gewünschten Förderrichtung bzw. - geschwindigkeit einzelner Güter anzupassen. Somit können mittels des erfindungsgemäßen Verfahrens Transportbahnen nicht nur genutzt werden, um Fördergüter unidirektional zu befördern, sondern es ist eine Richtungsumkehr des Förderflusses möglich. Dies ermöglicht erstmals ein Rückführen von auf einer Transportbahn befindlichen Gütem zu einem Ausgangspunkt. Somit können beispielsweise versehentlich zu viel in eine Förderbahn eingegebene Güter zurückgeführt und eingangs der Transportbahn wieder entnommen werden.

Des weiteren können durch die Möglichkeit, den Neigungswinkel der Transportbahn der gewünschten Fördergeschwindigkeit eines zu transportierenden Gutes in Abhängigkeit von dessen Gewichtskraft einzustellen, auf ein und derselben Transportbahn Güter von unterschiedlichstem Gewicht transportiert werden, ohne daß diese aufgrund ihres hohen Gewichts eine unerwünscht hohe Transportgeschwindigkeit erhalten oder aber aufgrund ihres sehr kleinen Gewichts bei zu flacher Transportbahn nicht in Bewegung gesetzt werden. Somit wird mit Hilfe des erfindungsgemäßen Verfahrens ein Maß an Flexibilität für die vergleichsweise einfach aufgebauten schwerkraftbetriebenen Transportbahnen erreicht, wie es zuvor lediglich mit angetrieben Transportbahnen möglich war.

Dabei sind grundsätzlich zwei verschiedene Arten des Veränderns des Neigungswinkels denkbar. Zum einen kann der Neigungswinkel aktiv, d. h. beispielsweise durch Betätigen einer Neigungseinstellvorrichtung, erfolgen. Hierzu sind in dem System Aktuaktoren vorzusehen, die über einen von außen zugeführten Antrieb die Neigung der Transportbahnen verstellen. Derartige Systeme sind immer dann zu bevorzugen, wenn neben einer Fördergeschwindigkeitseinstellung auch eine Einstellung der Förderrichtung vorzunehmen ist. Auch lassen sich mit einem aktiven System Fördergeschwindigkeiten sehr genau einstellen. So kann beispielsweise in Kombination mit einem Sensor für die durch das Gut ausgeübte Gewichtskraft eine sehr exakte Neigungseinstellung vorgenommen werden, so daß exakt und reproduzierbar für zu transportierende Güter von unterschiedlichstem Gewicht gleiche Fördergeschwindigkeiten erreicht werden können.

Anstelle einer aktiven Veränderung des Neigungswinkels ist es jedoch auch denkbar, im Zusammenhang mit dem erfindungsgemäßen Verfahren den Neigungswinkel passiv zu verändern. Diese geschieht typischerweise als Reaktion auf eine von einem zu transportierenden Gut ausgeübte Gewichtskraft. Hierzu eignen sich federelastische Elemente, welche eine quer zur Horizontalen ausgerichtete Wirkrichtung aufweisen. Derartige Elemente können dann in zumindest einem Punkt der Transportbahn angeordnet sein und abhängig von der durch das auf der Transportbahn aufgesetzte Gut ausgeübten Gewichtskraft durch federelastische Deformation eine Höhenveränderung des Punktes bewirken, an dem sie an der Transportbahn angreifen, und somit bei geeigneter Befestigung der Transportbahn an einem Drehpunkt eine Neigungsveränderung der Bahn selbst. Ein solches System ist vergleichsweise einfach aufgebaut, wobei für schwere zu transportierende Güter aufgrund der Deformation eines federelastischen Elementes eine Verringerung der Neigung der Transportbahn und damit eine Verringerung der Hangabtriebskraft und somit schließlich der Fördergeschwindigkeit erreicht wird. Bei leichteren zu transportierenden Gütern, für die das federelastische Element weniger stark deformiert wird, bleibt die zum Transport nötige stärkere Neigung der Transportbahn erhalten.

Zur **Lösung** der bezüglich der Transportbahn genannten Aufgabe wird für eine solche Transportbahn zum Transportieren von Gütem mittels Schwerkraft vorgeschlagen, daß die Transportbahn zum Anpassen der Fördergeschwindigkeit eine Einrichtung zum Verstellen eines auf die Horizontale bezogenen Neigungswinkels der Bahn während des Förderbetriebs aufweist.

Mit einer derartigen Transportbahn ist in vorteilhafter Weise das oben beschriebene Verfahren durchzuführen, mit den dort ebenfalls ausgeführten Vorteilen.

Entsprechend der beiden Alternativen bezüglich des Verfahrens kann die Einrichtung zum Verstellen des Neigungswinkels an der Transportbahn eine aktiv betätigbare Vorrichtung sein, oder jedoch auch eine passive Einstelleinrichtung. Gleichermaßen ist es denkbar, eine Einstelleinrichtung zu verwenden, die sowohl aktive als auch passive Eigenschaften aufweist. So kann als aktive Einstelleinrichtung beispielsweise eine an zumindest einem Punkt der Transportbahn angreifende, pneumatisch oder hydraulisch betätigbare Kolben-Zylinder-Einheit gewählt werden, wobei in diesem Falle die Transportbahn in einem Punkt, vorzugsweise in einem Endpunkt drehbar gelagert ist. Eine solche aktiv betätigbare Kolben-Zylinder-Einheit kann beispielsweise so konzipiert sein, daß sie ohne äußere Ansteuerung federelastisch ist und somit als passive Einstelleinrichtung wirkt.

Für eine passiv wirkende Einstelleinrichtung wird vorgeschlagen, daß sie ein quer zur Horizontalen wirkendes, federelastisches Element aufweist, welches abhängig von der auf ihm lastenden Gewichtskraft eine Neigungsanpassung der Transportbahn bewirkt. Dabei wird bevorzugt, daß die Transportbahn in zumindest einem Punkt drehbar gelagert ist, vorzugsweise an einem der entlang einer Förderachse gelegenen Enden, wobei das federelastische Element am gegenüberliegenden Ende angeordnet ist.

Als federelastisches Element kann dabei eine herkömmliche Druckfeder, beispielsweise eine Spirale oder Blattfeder, einen Druckfederkolben, ein Element aus elastischem Material, wie beispielsweise Gummi oder ähnlichem, oder weitere derartige Elemente verwendet werden.

Schließlich wird bezüglich der Transportbahn vorgeschlagen, hierfür eine Rollenbahn oder einen in entsprechenden Führungen laufenden Laufwagen zu verwenden. Selbstverständlich können aber auch andere, hier nicht explizit aufgeführte Konzepte für schwerkraftbetriebene Transportbahnen im Rahmen der vorliegenden Erfindung eingesetzt werden.

Weitere Vorteile und Merkmale der Erfindung ergeben sich aus der folgenden Beschreibung von Ausführungsbeispielen anhand der beigefügten Zeichnung. In der Zeichnung zeigen:
- Fig. 1a: eine schematische Ansicht eines Beispiels für eine Transportbahn mit aufgesetztem Transportgut in einer ersten Neigungseinstellung;
- Fig. 1b: eine Ansicht des in Fig. 1a gezeigten Beispiels für eine Transportbahn in einer zweiten Neigungseinstellung;
- Fig.2a: eine Ansicht eines Ausführungsbeispiels für eine erfindungsgemäße Transportbahn mit darauf aufgesetztem Fördergut von geringem Gewicht und
- Fig. 2b: eine Ansicht auf die in Fig. 2a gezeigte Transportbahn mit aufgesetztem Fördergut von höherem Gewicht.

In Fig. 1a ist in einer Ansicht von der Seite schematisch ein erstes Beispeil für eine Transportbahn 1 gezeigt, mit der das bekannte Verfahren ausgeführt werden kann. Auch die Transportbahn 1 weist mindestens einen in der Führungsschiene 5 laufenden Laufwagen 4 auf, auf den, in der Figur gezeigt, eine Palette 3 aufgesetzt ist. Auf der Palette 3 ruht - schematisch dargestellt - das Fördergut 2.

Ein Stützpfosten 6 ruht auf dem Untergrund 11 und trägt das in der Figur rechts gezeigte Ende der Transportbahn 1 in einem Drehlager 7. Die Transportbahn 1 ist somit mit dem Stützpfosten 6 über das Drehlager 7 verschwenkbar verbunden. An dem dem Stützpfosten 6 gegenüberliegenden, in der Figur links dargestellten Ende, ist die Transportbahn 1 über einen Neigungssteller 8, der zwischen dem Untergrund 11 und der Transportbahn 1 angeordnet ist, abgestützt. Der Neigungssteller 8 ist ein aktiver Neigungssteller, welcher in diesem Beispiel als eine aus einem Zylinder 10 und einem Kolben 9 bestehende Einheit ausgebildet ist. Diese Kolben-Zylinder-Einheit ist aktiv verstellbar, beispielsweise durch Betrieb mit Druckluft oder Hydrauliköl. Der mit S bezeichnete Doppelfeil gibt dabei die Stellrichtung des Neigungsstellers 8 an. Durch eine Relatiwerschiebung zwischen dem Kolben 9 und dem Zylinder 10 des Neigungsstellers 8 kann das in der Figur links gezeigte Ende der Transportbahn auf unterschiedliche Höhen bezogen auf den Untergrund 11 gebracht werden, wodurch ein Verschwenken der Transportbahn 1 gegenüber dem Stützpfosten 6 in dem Drehlager 7 erfolgt. Durch eine solche Verstellung kann schließlich der mit α₁ bzw. α₂ bezeichnete Neigungswinkel aktiv verändert werden. Es können so unterschiedlich steile Neigungswinkel αᵢ für zu transportierende Güter unterschiedlichen Gewichtes eingestellt werden. Für vergleichsweise schwere Güter wird ein geringerer Neigungswinkel α eingestellt, wohingegen leichte Güter ein steilerer Neigungswinkel α gewählt wird. Auf diese Weise ist es möglich, Transportgüter unterschiedlichsten Gewichtes mit annähernd gleichbleibender Geschwindigkeit entlang derselben schwerkraftbetriebenen Transportbahn zu befördern.

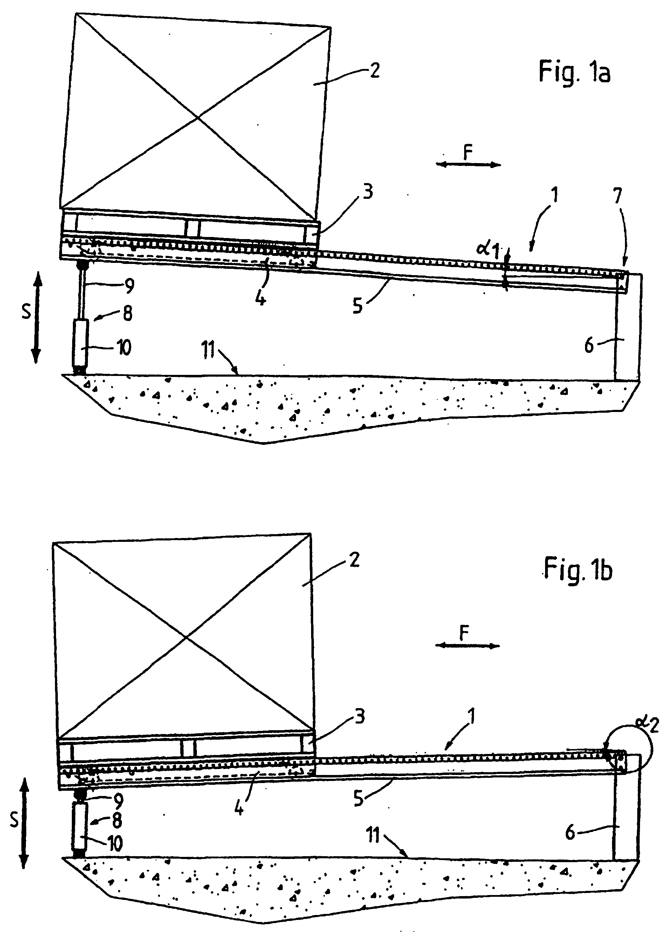

In Fig. 1b ist die in Fig. 1a gezeigte Anordnung dargestellt, wobei der aus Kolben 9 und Zylinder 10 bestehende Neigungssteller 8 in einer maximal eingefahrenen Stellung dargestellt ist, so daß das in der Zeichnung links dargestellte Ende der Transportbahn 1 sich im Unterschied zu der in Fig. 1a dargestellten Situation unterhalb des Niveaus des an dem Stützpfosten 6 ausgebildeten Drehlagers 7 befindet. In dieser Stellung ist der Neigungswinkel α₂ so ausgebildet, daß - im Gegensatz zu der in Fig. 1a dargestellten Situation - das auf der Transportbahn 1 abgestellte Fördergut 2 einen umgekehrt gerichteten, in der Figur von rechts nach links weisenden Förderweg nimmt. Die Möglichkeit, das Fördergut 2 in Abhängigkeit der Einstellung des Neigungswinkels α auch in zwei einander entgegengesetzte Richtungen transportieren zu können, ist durch den mit F bezeichneten Doppelfeil angedeutet.

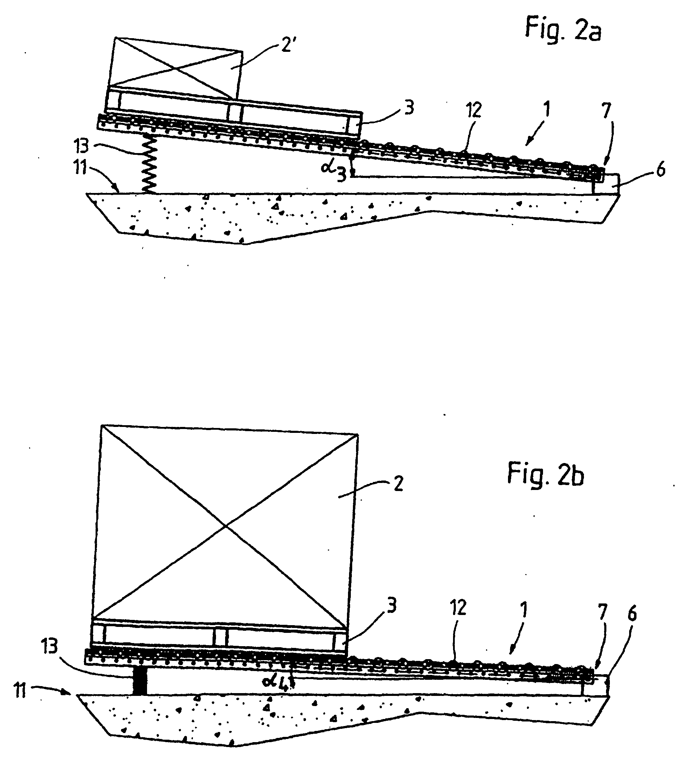

Ein Ausführungsbeispiel für eine erfindungsgemäße Transportbahn ist in den Fign. 2a und 2b gezeigt. Die hier dargestellte Transportbahn 1 ist als Rollenbahn 12 ausgebildet. An ihrem in den Figuren rechts gezeigten Ende ist die Transportbahn 1 wiederum an einem (gegenüber dem Tragpfosten aus dem ersten Ausführungsbeispiel verkürzten) Tragpfosten 6 über ein Drehlager 7 verschwenkbar gelagert. Zwischen dem Untergrund 11 und dem in den Figuren links dargestellten Ende der Transportbahn 1 ist anstelle des Neigungsstellers 8 aus dem ersten Ausführungsbeispiel ein federelastisches Element 13 angeordnet. Dieses stützt sich einerseits auf dem Untergrund 11 ab und trägt andererseits das in den Figuren links dargestellte Ende der Rollenbahn. Bei dem hier dargestellten Ausführungsbeispiel handelt es sich um ein Ausführungsbeispiel für eine erfindungsgemäße Transportbahn mit einer passiven Neigungsverstellung. Das federelastische Element 13, welches in den Fign. 2a und 2b als Spiraldruckfeder angedeutet ist, kann dabei durch irgendeine Art von Feder, beispielsweise eine Spiralfeder, eine Blattfeder oder ein ähnliches Federelement, ein hydraulisch oder pneumatisch wirkender Druckfederkolben oder aber durch ein Element aus einem elastischen Material, wie beispielsweise Gummi oder ähnlichem, verwirklicht sein. Abhängig von dem Gewicht des auf die Transportbahn 1 aufgesetzten Transportgutes 2 bzw. 2' gibt das federelastische Element 13 mehr oder weniger nach, so daß bei einem leichtgewichtigen Transportgut 2', wie in Fig. 2a dargestellt, das federelastische Element 13 vergleichsweise wenig deformiert wird, so daß im Bereich des federelastischen Elementes 13 ein großer Abstand zwischen dem Untergrund 11 und der Transportbahn 1 besteht, wohingegen bei einem Transportgut 2 mit gegenüber dem Transportgut 2' höheren Gewicht das federelastische Element 13 deutlich stärker deformiert wird, wodurch sich im Bereich des federelastischen Elementes 13 ein kleinerer Abstand zwischen Untergrund 11 und Transportbahn 1 einstellt. Somit wird bei einem auf die Transportbahn 1 aufgesetzten schwergewichtigen Transportgut 2 die Transportbahn 1 unter Ausbildung eines geringeren Neigungswinkels α₄ in Richtung des Untergrundes 11 verschwenkt, wobei das in dem Drehgelenk 7 gelagerte Ende der Transportbahn 1 sich um das Drehgelenk dreht. Bei einem leichtgewichtigen Transportgut 2' dagegen bleibt die Transportbahn 1 in einem steileren Winkel α₃.

Ein maximaler Neigungswinkel α wird dabei über die Abmessungen und die Elastizität des federelastischen Elementes 13 bestimmt, wobei ausgehend von diesem maximalen Neigungswinkel α das federelastische Element 13 sich bei aufgesetztem Transportgut unter Ausbildung immer kleinerer Neigungswinkel α stärker verformt. Somit wird erreicht, daß für sehr schwere Transportgüter 2 ein flacher Neigungswinkel eingestellt ist, so daß trotz der hohen Gewichtskraft keine übermäßige Transportgeschwindigkeit auftritt, wohingegen bei leichtgewichtigen Transportgütern 2' sich ein größerer Neigungswinkel a einstellt, so daß auch die leichten Transportgüter sicher entlang der schwerkraftbetriebenen Transportbahn 1 transportiert werden können.

Mit der Erfindung wird folglich ein Verfahren sowie eine Transportbahn angegeben, bei der Fördergeschwindigkeit angepaßt werden können. Im Falle eines aktiven Neigungsstellers kann dabei sowohl die Förderrichtung als auch die Fördergeschwindigkeit bestimmt werden, wohingegen für passive Systeme lediglich die Fördergeschwindigkeit abhängig von der durch das zu fördernde Gut ausgelösten Gewichtskraft bestimmt wird. In den geschilderten Ausführungsbeispielen sind die zu transportierenden Güter 2 bzw. 2' auf Paletten angeordnete Güter dargestellt, jedoch ist die Erfindung nicht auf die Anwendung von palettiertem Gut beschränkt, es können ebensogut auch einzelne Stückgüter, in Kartons verpackte Güter, in Drahtkäfigen zusammengefaßte Güter oder auf ähnliche Weise gebündelte Güter transportiert werden. Mit der Erfindung ist es erstmals möglich, unter Zuhilfenahme einfachster Mittel die Richtung und/oder die Fördergeschwindigkeit beispielsweise in Abhängigkeit von dem durch das zu befördernde Gut ausgelöstem Gewicht anzupassen, wodurch ein hoher Grad an Flexibilität beim Einsatz der erfindungsgemäßen Transportbahn erzielt wird.

### Bezugszeichenliste

- 1: Transportbahn
- 2: Fördergut
- 2': Fördergut
- 3: Palette
- 4: Laufwagen
- 5: Führungsschiene
- 6: Stützpfosten
- 7: Drehlager
- 8: Neigungssteller
- 9: Kolben
- 10: Zylinder
- 11: Untergrund
- 12: Rollenbahn
- 13: federelastisches Element

- S: Stellrichtung
- F: Förderrichtung

- α₁: Neigungswinkel
- α₂: Neigungswinkel
- α₃: Neigungswinkel
- α₄: Neigungswinkel

## Patentansprüche

1. Verfahren zum Anpassen der Fördergeschwindigkeit für entlang einer schwerkraftbetriebenen Transportbahn (1) transportierte Güter (2, 2'), wobei während des Betriebes der Transportbahn (1) zum Anpassen der Fördergeschwindigkeit ein auf die Horizontale bezogener Neigungswinkel (α₁, α₂, α₃, α₄) der Transportbahn (1) passiv als Reaktion auf die von dem transportierten Gut ausgeübte Gewichtskraft veränderbar ist.

2. Transportbahn zum Transportieren von Gütern (2, 2'), mittels Schwerkraft, **dadurch gekennzeichnet, daß** die an ihrem einen Ende um einen Punkt (7) schwenkbar gelagerte Transportbahn (1) zum Anpassen der Fördergeschwindigkeit des Transportgutes (2, 2') eine passive Einstelleinrichtung (13) zum Verstellen eines auf die Horizontale bezogenen Neigungswinkels (α₁, α₂, α₃, α₄) der Bahn während des Förderbetriebs aufweist, und daß die Transportbahn (1) ein quer zur Horizontalen wirkendes, federelastisches Element (13) aufweist, welches abhängig von der auf ihm lastenden Gewichtskraft eine Neigungsanpassung der Transportbahn (1) bewirkt.

3. Transportbahn nach Anspruch 2, **dadurch gekennzeichnet, daß** das federelastische Element (13) eine Druckfeder ist.

4. Transportbahn nach Anspruch 2, **dadurch gekennzeichnet, daß** das federelastische Element (13) ein hydraulisch oder pneumatisch wirkender Druckfederkolben ist.

5. Transportbahn nach Anspruch 2, **dadurch gekennzeichnet, daß** das federelastische Element (13) ein aus einem elastischen Material, wie beispielsweise Gummi oder ähnlichem, gebildetes Element ist.

6. Transportbahn nach einem der Ansprüche 2 bis 5, **dadurch gekennzeichnet, daß** die Transportbahn (1) eine Rollenbahn (12) ist.

7. Transportbahn nach einem der Ansprüche 2 bis 5, **dadurch gekennzeichnet**, da**ß** die Transportbahn (1) einen in einer Führung (5) geführten Laufwagen (4) aufweist.

## Claims

1. Method of adapting the conveying speed for articles (2, 2') transported along a gravity-operated transporting path (1), in which, for adapting the conveying speed during the operation of the transporting path (1), it is possible for an angle of inclination (α₁, α₂, α₃, α₄) of the transporting path (1) in relation to the horizontal to be changed passively as a reaction to the weight of the transported article or articles.

2. Transporting path for transporting articles (2, 2') by means of gravity, **characterized in that**, for adapting the conveying speed of the transportable article or articles (2, 2'), the transporting path (1), which is mounted such that it can be pivoted about a point (7) at one end, has a passive adjusting arrangement (13) by means of which an angle of inclination (α₁, α₂, α₃, α₄) of the path in relation to the horizontal is adjusted during the conveying operation, and **in that** the transporting path (1) has a resiliently elastic element (13) which acts transversely to the horizontal and, depending on the weight bearing on it, adapts the inclination of the transporting path (1).

3. Transporting path according to Claim 2, **characterized in that** the resiliently elastic element (13) is a compression spring.

4. Transporting path according to Claim 2, **characterized in that** the resiliently elastic element (13) is a hydraulically or pneumatically acting compressed-spring piston.

5. Transporting path according to Claim 2, **characterized in that** the resiliently elastic element (13) is an element which is formed from an elastic material, for example rubber or the like.

6. Transporting path according to one of Claims 2 to 5, **characterized in that** the transporting path (1) is a roller-conveyor path (12).

7. Transporting path according to one of Claims 2 to 5, **characterized in that** the transporting path (1) has a carriage (4) which is guided in a guide (5).

## Revendications

1. Procédé de régulation de la vitesse d'avance d'articles (2, 2') transportés le long d'une bande transporteuse (1) entraînée par la gravité, dans lequel, pendant le fonctionnement de la bande transporteuse (1) pour la régulation de la vitesse d'avance, un angle d'inclinaison par rapport à l'horizontale (α₁, α₂, α₃, α₄) de la bande transporteuse (1) peut être varié de manière passive en tant que réaction à la force de pesanteur exercée par l'article transporté.

2. Bande transporteuse pour transporter des articles (2, 2') au moyen de la gravité, **caractérisée en ce que** la bande transporteuse (1) montée à l'une de ses extrémité de manière à pouvoir pivoter autour d'un point (7), pour la régulation de la vitesse d'avance de l'article transporté (2, 2'), présente un dispositif d'ajustement passif (13) pour le réglage d'un angle d'inclinaison par rapport à l'horizontale (α₁, *α*₂, α₃, α₄) de la bande pendant l'entraînement d'avance, et **en ce que** la bande transporteuse (1) présente un élément (13) élastique à ressort agissant transversalement à l'horizontale, qui provoque en fonction de la force de pesanteur s'exerçant sur lui, une régulation de l'inclinaison de la bande transporteuse (1).

3. Bande transporteuse selon la revendication 2, **caractérisée en ce que** l'élément élastique à ressort (13) est un ressort de compression.

4. Bande transporteuse selon la revendication 2, **caractérisée en ce que** l'élément élastique à ressort (13) est un piston à ressort de compression à action hydraulique ou pneumatique.

5. Bande transporteuse selon la revendication 2, **caractérisée en ce que** l'élément élastique à ressort (13) est un élément formé à partir d'un matériau élastique, comme par exemple du caoutchouc ou similaire.

6. Bande transporteuse selon l'une quelconque des revendications 2 à 5, **caractérisée en ce que** la bande transporteuse (1) est une bande à rouleaux (12).

7. Bande transporteuse selon l'une quelconque des revendications 2 à 5, **caractérisée en ce que** la bande transporteuse (1) présente un chariot (4) guidé dans une coulisse (5).
